# EUROPÄISCHE PATENTSCHRIFT

(11) **EP 2 886 306 B1**
(45) Veröffentlichungstag und Bekanntmachung des Hinweises auf die Patenterteilung: **07.02.2018**
(21) Anmeldenummer: 14198133.2
(22) Anmeldetag: 16.12.2014
(51) Int. Cl.: B29C 65/82, B29C 65/02, F24H 1/12, F28F 9/02, F28F 21/06, B29C 65/10

(54) **FÜGEBAUTEIL ZUM AUFNEHMEN UND/ODER FÜHREN EINES FLUIDS**
JOINT COMPONENT FOR HOLDING AND/OR CONVEYING A FLUID
COMPOSANT D'ASSEMBLAGE DESTINÉ À RECEVOIR ET/OU GUIDER UN FLUIDE

(30) Priorität: 19.12.2013 DE 102013021287
(43) Veröffentlichungstag der Anmeldung: 24.06.2015
(73) Patentinhaber: Stiebel Eltron GmbH & Co. KG, 37603 Holzminden (DE)
(72) Erfinder: Jansen, Martin, 49740 Haselünne (DE); Henke, Günter, 37627 Deensen (DE); Weiß, Gerhard, 37627 Wangelnstedt (DE)

(56) Entgegenhaltungen:
- DE-U1- 20 213 972
- JP-A- 2003 193 920
- JP-A- 2004 351 730
- JP-A- 2009 097 011
- US-A1- 2006 207 928

## Beschreibung

Die Erfindung betrifft ein Fügebauteil zum Aufnehmen und/oder Führen eines Fluids, einen Warmwasserbereiter zum Erwärmen von Wasser sowie ein Verfahren zum Überprüfen von Verbindungsnähten in einem Fügebauteil.

Unter einem Fügebauteil wird vorliegend ein Bauteil verstanden, das aus wenigstens zwei Teilschalen zusammengesetzt ist. Dabei sind die beiden Teilschalen über eine Fügefläche miteinander verbunden. Das Fügebauteil nimmt dabei ein Fluid auf und/oder führt dieses. Solch ein Fügebauteil ist beispielsweise ein Heizblockkörper, der in einem Warmwasserbereiter wie einem Durchlauferhitzer verwendet wird. In dem Heizblockkörper wird das zu erwärmende Wasser in Kanälen geführt. An einer Einlassstelle wird das kalte Wasser zugeführt, das an einer Auslassstelle als warmes Wasser abfließt.

Ein solches Fügebauteil wird dabei üblicherweise durch Schweißen, Kleben oder dergleichen über Verbindungsnähte aus zwei Teilschalen mit zueinander korrespondierenden Kontaktflächen beziehungsweise Fügeflächen zusammengesetzt. Problematisch bei solchen Verbindungsnähten ist die Überprüfung der Qualität und Dichtigkeit von sogenannten inneren Verbindungsnähten, nämlich Verbindungsnähte, die nicht von außen zugänglich sind wie beispielsweise die Verbindungsnähte, die zwei Kanäle in einem Fügebauteil miteinander verbinden. Die Überprüfung solcher inneren Verbindungsnähte kann nur durch unverhältnismäßig teure und zeitaufwendige Verfahren durchgeführt werden. Dabei wird entweder das Bauteil zerstört oder es werden zerstörungsfreie Prüfmethoden wie das Erstellen von Computertomographien oder Ultraschallprüfungen an den Verbindungsnähten angewendet. Dies ist zum einen sehr zeitaufwendig und kostenintensiv und zum anderen wird ein Qualitätsverlust innerer Verbindungsnähte an nicht geprüften Fügebauteilen nicht bemerkt. Eine solche Prüfung kann demnach nur stichprobenartig erfolgen und nicht an jedem Fügebauteil.

JP 2004351730 zeigt ein Fugebauteil zum Aufnehmen und/oder Führen eines Fluid mit einer ersten Teilschale mit einer ersten Außenseite, einer Innenseite und einer an der ersten Innenseite vorgesehenen ersten Flügelfläche. Ferner ist eine zweite Teilschale mit einer zweiten Außenseite, einer zweiten Innenseite und einer an der zweiten Innenseite vorgesehenen zweiten Flügelfläche vorgesehen. Die erste und zweite Teilschale werden über eine Verbindungsnaht miteinander verbunden.

US 2006/0207928 A1 zeigt ein Fugebauteil zum Aufnehmen und Führen eines Fluids.

DE 202 13 972 U1 zeigt einen Anschlussabschnitt eines Kunststoffrohres mit einer Längsachse, einem Basiskörper, der mit dem Kunststoffrohr ausgebildet ist. Ferner ist eine erste Umfangsfläche vorgesehen, die zur thermisch-stoffschlüssigen Verbindung mit einer gegengleich ausgebildeten zweiten Umfangsfläche eines Verbindungsabschnittes eines weiteren Kunststoffrohres vorgesehen ist.

JP 2009097011 beschreibt eine Harzverbindung, welche für Vibrationsschweißen geeignet ist.

JP 2003193920 zeigt ein Fügebauteil zum Führen eines Fluids.

Aufgabe der vorliegenden Erfindung war es somit, wenigstens eines der oben genannten Probleme zu beheben oder zu verringern, vorzugsweise soll die Überprüfung von Verbindungsnähten verbessert und zuverlässiger werden, insbesondere soll ein Qualitätsverlust direkt am Fügebauteil erkannt werden.

Erfindungsgemäß wird zum Lösen der Aufgabe ein Fügebauteil zum Aufnehmen und/oder Führen eines Fluids gemäß Anspruch 1 vorgeschlagen. Das Fügebauteil umfasst eine erste Teilschale mit einer ersten Außenseite, einer ersten Innenseite und einer an der ersten Innenseite vorgesehenen ersten Fügefläche und eine zweite Teilschale mit einer zweiten Außenseite, einer zweiten Innenseite und einer an der zweiten Innenseite vorgesehenen zweiten Fügefläche. Dabei sind die erste und die zweite Teilschale an der ersten und zweiten Fügefläche über eine Verbindungsnaht miteinander verbunden und bilden wenigstens zwei Kanäle zum Aufnehmen und/oder Führen des Fluids. Die wenigstens zwei Kanäle sind in einem Innenabschnitt durch die Verbindungsnaht voneinander getrennt und im Innenabschnitt ist ein sich entlang der Verbindungsnaht erstreckender Hohlraum vorgesehen. In der ersten und/oder zweiten Teilschale ist wenigstens eine Öffnung zum Überprüfen der Qualität der Schweißnaht zwischen der ersten Fügefläche und der ersten Außenseite und/oder der zweiten Fügefläche und der zweiten Außenseite angeordnet.

Das Fügebauteil ist zum Aufnehmen und/oder Führen eines Fluids geeignet. Dabei wird unter einem Fluid ein flüssiges oder gasförmiges Medium wie bspw. Wasser oder Luft verstanden. Ein Warmwasserbereiter nimmt beispielsweise kaltes Wasser in wenigstens zwei Kanälen auf, führt dieses u.a. durch so genannte Heizkanäle zum Erwärmen des Wassers und lässt das warme Wasser wieder ausströmen. Ein solches Fluidbauteil weist dabei wenigstens zwei Kanäle auf, die das Fluid Aufnehmen und Führen. Unter einem Kanal wird vorliegend ein Kanalabschnitt oder ähnliches verstanden, der mit weiteren Kanälen verbunden sein kann. Insbesondere sind die wenigstens zwei Kanäle über eine Umlenkstelle miteinander verbunden. Die wenigstens zwei Kanäle sind in einem Innenabschnitt durch die Verbindungsnaht wie einer Schweißnaht, einer geklebten Naht oder dergleichen voneinander getrennt. Dabei sind die Verbindungsnähte in dem Innenabschnitt so angeordnet, dass sie von außen nicht zugänglich sind, es sind also innere Verbindungsnähte. Der Innenabschnitt umfasst somit zwei Kanäle, die durch eine innere Verbindungsnaht voneinander getrennt sind.

Die Kanäle in dem Innenabschnitt können beispielsweise durch Umlenkstellen miteinander verbunden sein und demnach gemeinsam mit den Umlenkstellen einen mäanderförmigen Verlauf bilden. Die Umlenkstellen befinden sich dabei außerhalb des Innenabschnitts. In einem solchen Innenabschnitt ist ein sich entlang der Verbindungsnaht erstreckender Hohlraum vorgesehen. Dieser Hohlraum ist, insbesondere in Etwa in der Mitte, zwischen den zwei Kanälen vorgesehen, wobei zwischen den Kanälen und dem Hohlraum jeweils zumindest ein Teil der Verbindungsnaht angeordnet ist. Die innere Verbindungsnaht wird in einer geschlossenen, schleifenförmigen Kontur ausgeführt, wodurch der Hohlraum zwischen den Fügeflächen entsteht. Ein solcher Hohlraum ist nur in dem Innenabschnitt vorgesehen. Der Hohlraum ist mit wenigstens einer Öffnung verbunden, die zwischen der ersten Fügefläche und der ersten Außenseite und/oder der zweiten Fügefläche und der zweiten Außenseite angeordnet ist. Demnach verbindet die Öffnung den Hohlraum mit der ersten und/oder zweiten Außenseite. Der Hohlraum wird also durch die Öffnung nach außen bzw. zur Umgebung hin geöffnet. Dadurch kann bei einem Qualitätsverlust der Verbindungsnaht wie poröse Nahtstellen oder Undichtigkeiten das in den Kanälen geführte Fluid zur Außenseite hin austreten. Somit ist möglich, eine einfache Prüfung wie Überdruck oder Leckageprüfung für die Detektion von Undichtigkeiten oder Qualitätseinbrüchen bei der Festigkeit von Verbindungsnähten einzusetzen. Diese Prüfungen können durch das Vorsehen der Öffnungen und des Hohlraums in den inneren Verbindungsnähten an allen Teilen einer Bauteilserie durchgeführt werden, ohne dass das Fügebauteil dabei zerstört werden muss.

Vorzugsweise sind die erste und zweite Teilschale jeweils als Kunststoff-Spritzgussteil ausgebildet. Somit können die Fügebauteile mit hoher Genauigkeit hergestellt werden. Zudem wird eine große Vielfalt an Formen und Oberflächenstrukturen für das Fügebauteil gewährleistet.

In einer bevorzugten Ausführungsform ist das Fügebauteil als Heizblockkörper zur Verwendung in einem Warmwasserbereiter zum Erwärmen von Wasser ausgeführt. Ein solcher Heizblockkörper weist dabei wenigstens eine erste und eine zweite Teilschale auf. In den Kanälen sind zumindest teilweise Heizwendeln angeordnet, die das kalte Wasser erwärmen. Ein solcher Heizblockkörper weist dabei mehrere Kanäle auf, die über Umlenkstrecken miteinander verbunden sind. Der Verlauf ist dabei mäanderförmig. Vorteilhaft hierbei ist, dass sowohl bei der Serienproduktion eines Heizblockkörpers als auch bei der Verwendung des Heizblockkörpers bei einem Endverbraucher eine Leckage oder ein Überdruck sehr schnell entdeckt werden kann.

In einer besonders bevorzugten Ausführungsform ist die Öffnung als kreisrunde Bohrung oder Langloch ausgeführt. Die kreisrunden Bohrungen bzw. Langlöcher werden dabei bei einem Spritzgussteil direkt bei der Fertigung des Fügebauteils mit eingespritzt. Kleine Öffnungen sind dabei für die Fertigung von Vorteil.

Vorzugsweise sind die erste und die zweite Teilschale über einen im Wesentlichen abriebsfreien und/oder erschütterungsfreien Schweißvorgang verbunden sind, insbesondere mittels Warmgasschweißen zusammengesetzt und fest verbunden. Die erste und die zweite Teilschale sind dabei durch die Zufuhr von Wärme über Medien verschweißt. Ein solches Medium ist insbesondere Luft oder ein anderes Gas. Weiterhin kommen auch Laserstrahl, Plasmastrahl oder ein anderer Energiestrahl in Betracht. Die Wärme wird somit in den zu verschweißenden Bereichen, nämlich insbesondere den Fügeflächen transportiert. Die Wärme wird somit nicht bei den Fügeflächen erzeugt, indem eine Umwandlung von Bewegungsenergie in Wärmeenergie erfolgt. Durch einen abriebfreien und/oder erschütterungsfreien Schweißvorgang wird somit kein Abrieb erzeugt, der in den Teilschalen bzw. Kanälen verbleiben und somit Probleme bereiten könnte.

In einer bevorzugten Ausführungsform ist das Fügebauteil gekennzeichnet durch einen Außenabschnitt, in dem die wenigstens zwei Kanäle durch die Verbindungsnaht von der Umgebung getrennt sind, und die erste und/oder zweite Fügefläche weist in dem Innenabschnitt und/oder Außenabschnitt eine Anschrägung auf. In dem Außenabschnitt sind demnach keine zwei Kanäle miteinander verbunden.

Vielmehr ist ein Kanal in dem Außenabschnitt durch eine Verbindungsnaht von der Umgebung getrennt.

Durch eine Anschrägung der Fügefläche in dem Innenabschnitt und/oder Außenabschnitt wird bezogen auf eine übliche Fügefläche, also eine plane, ebene Fügefläche, die Länge der Schweißnaht verlängert. Eine solche Anschrägung der Fügeflächen ist insbesondere in hoch belasteten Querschnitten vorgesehen, da durch die Anschrägung die Festigkeit der Verbindungsnaht erhöht wird, insbesondere um bis zu 50% erhöht wird. Die Verbindungsnaht wird dabei nicht zerstört. Bei einem Heizblockkörper einer Warmwasserbereiters treten solche hoch belasteten Querschnitte insbesondere in den Umlenkstellen auf, die die Kanäle miteinander verbinden. Demnach ist bei einem Heizblockkörper eines Warmwasserbereiters insbesondere im Bereich der Umlenkstellen eine Anschrägung der Fügeflächen vorteilhaft.

In einer besonders bevorzugten Ausführungsform weist die Anschrägung einen Winkel von 30° bis 60°, insbesondere 45°, auf. Bei einer Anschrägung um einen Winkel von 45° wird bei einer Breite einer ebenen Fügefläche von beispielsweise 3mm, die Breite für die Verbindungsnaht auf 4,5mm erhöht. Hochbelastete Querschnitte können somit ohne hohen Konstruktionsaufwand entlastet werden.

Zudem wird zum Lösen der Aufgabe ein Warmwasserbereiter zum Erwärmen von Wasser vorgeschlagen, der ein Fügebauteil nach einer der vorstehenden erfindungsgemäßen Ausführungsform umfasst. Ein solcher Warmwasserbereiter umfasst als Fügebauteil insbesondere einen Heizblockkörper, in dem die wenigstens zwei Kanäle mäanderförmig angeordnet sind. Vorteilhaft hierbei ist, dass sowohl bei der Serienproduktion des Warmwasserbereiters als auch bei der Verwendung des Warmwasserbereiters bei einem Endverbraucher eine Leckage oder ein Überdruck sehr schnell entdeckt werden kann.

Weiterhin wird ein Verfahren zum Überprüfen von Verbindungsnähten in einem Fügebauteil gemäß einem der vorstehenden Ausführungsformen zum Aufnehmen und/oder Führen eines Fluids vorgeschlagen. Das Verfahren umfasst die Schritte:
- Einleiten des Fluids in die wenigstens zwei Kanäle,
- Überprüfung der Qualität der Verbindungsnaht anhand wenigstens einer während der Herstellung in dem Fügebauteil vorgesehenen Öffnung, die einen sich entlang der Verbindungsnaht erstreckenden Hohlraum mit der ersten und/oder zweiten Außenseite der ersten bzw. zweiten Teilschale verbindet und durch die das Fluid bei einem Qualitätsverlust an der ersten bzw. zweiten Außenseite austritt.

Somit ist möglich, eine einfache Prüfung wie Überdruck oder Leckageprüfung für die Detektion von Undichtigkeiten oder Qualitätseinbrüchen bei der Festigkeit von Verbindungsnähten einzusetzen. Diese Prüfungen können durch das Vorsehen der Öffnungen und des Hohlraums in den inneren Verbindungsnähten an allen Teilen einer Bauteilserie durchgeführt werden, ohne dass das Fügebauteil zerstört wird. Fehler werden unmittelbar in der Produktion der Fügebauteile festgestellt. Die Wertschöpfungskette kann sofort unterbrochen werden.

Nachfolgend wird die Erfindung anhand von Ausführungsbeispielen unter Bezugnahme auf die begleitenden Figuren beispielhaft erläutert.
- Figur 1: zeigt eine Schnittansicht einer Ausführungsform eines erfindungsgemäßen Heizblockkörpers.
- Figur 2: zeigt einen Ausschnitt einer Ausführungsform einer erfindungsgemäßen ersten Teilschale in einer Draufsicht.
- Figur 3: zeigt einen Ausschnitt einer Ausführungsform eines erfindungsgemäßen Kanalabschnitts in einer perspektivischen Ansicht.

Die Figuren enthalten teilweise vereinfachte, schematische Darstellungen. Zum Teil werden für gleiche, aber gegebenenfalls nicht identische Elemente identische Bezugszeichen verwendet.

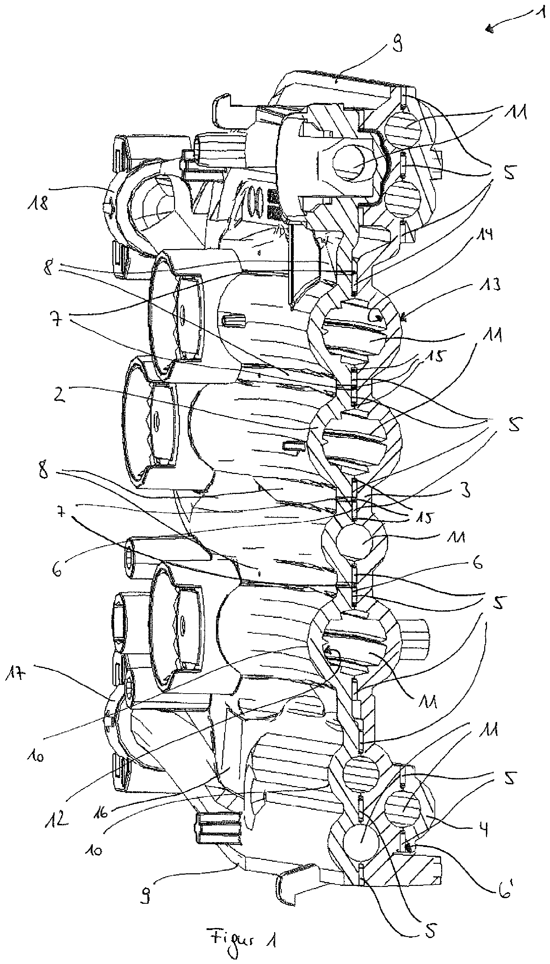

Figur 1 zeigt eine Schnittansicht eines Heizblockkörpers 1 als Ausführungsbeispiel eines Fügebauteils, der eine erste Teilschale 2, eine zweite Teilschale 3 sowie eine dritte Teilschale 4 aufweist. Die erste Teilschale 2 und die zweite Teilschale 3 weist eine erste Außenseite 10 und eine erste Innenseite 12 bzw. eine zweite Außenseite 13 und eine zweite Innenseite 14 auf. Auf der ersten Innenseite 12 und auf der zweiten Innenseite 14 sind die Fügeflächen 6 vorgesehen. Dabei ist die erste Teilschale 2 mit der zweiten Teilschale 3 und die dritte Teilschale 4 mit der zweiten Teilschale 3 verbunden. Durch die Verbindung der Teilschalen 2, 3 und 4 werden Kanäle 11 zum Aufnehmen und/oder Führen von Wasser als Beispiel eines Fluids gebildet. Die Kanäle 11 verlaufen parallel nebeneinander. Das Wasser wird durch eine Einlassstelle 18, welche mit den Kanälen 11 verbunden ist, kalt eingeführt. Einige der Kanäle 11 weisen Heizelemente (nicht dargestellt) auf, die das Wasser beim Durchlaufen der Kanäle 11 erwärmt. Das erwärmte Wasser tritt an einer Auslassstelle 17 wieder aus. Die Auslassstelle 17 ist dabei Teil des Heizblockkörpers 1.

Die einzelnen Teilschalen 2, 3, 4 sind jeweils durch Schweißen miteinander über eine Schweißnaht 5 als Beispiel einer Verbindungsnaht miteinander verbunden. Die Schweißnähte 5 verlaufen in Längsrichtung der Kanäle 11.

Der Heizblockkörper 1 weist vier Innenabschnitte 8 auf, in denen jeweils als Beispiel einer Öffnung zum Überprüfen der Qualität der Schweißnaht 5 zwei runde Bohrungslöcher 7 vorgesehen sind. Die Kanäle 11 sind in den Innenabschnitten 8 jeweils durch die Schweißnähte 5 voneinander getrennt. An Umlenkstellen 16, in Figur 1 nur teilweise zu erkennen, werden die Kanäle 11 zusammengeführt. Die runden Bohrungslöcher 7 sind in der ersten Teilschale 2 angeordnet und verlaufen dabei von der ersten Außenseite 10 bis hin zur Fügefläche 6. Alternativ oder zusätzlich könnten die runden Bohrungslöcher auch in der zweiten Teilschale angeordnet sein, um dann von der zweiten Außenseite zur Fügefläche zu verlaufen.

In Außenabschnitten 9 des Heizblockkörpers 1 trennen die Schweißnähte 5 die Kanäle 11 von der Umgebung. Eine Undichtigkeit der Schweißnaht 5 oder ähnliches würde daher entdeckt werden, ohne dass runden Bohrungen oder dergleichen vorgesehen sind.

In Figur 1 ist weiterhin zu erkennen, dass sich drei Hohlräume 15 in drei Innenabschnitten 8 entlang der Schweißnaht 5 erstrecken. Die drei Hohlräume 15 sind mit den runden Bohrungslöchern 7 verbunden. Durch die Verbindung der runden Bohrungslöcher 7 mit den Hohlräumen 15 kann ein Austreten des in den Kanälen 11 geführten Fluids und somit ein Qualitätsverlust der Schweißnaht entdeckt werden.

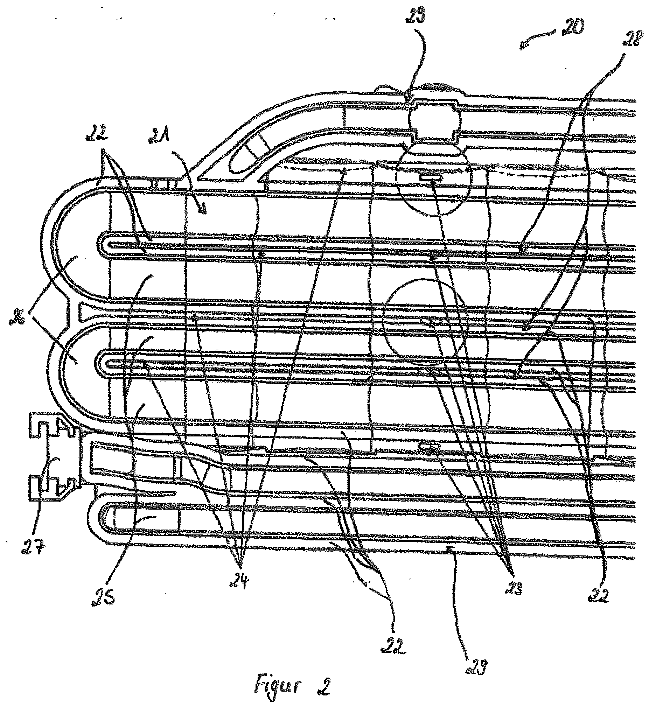

Figur 2 zeigt einen Ausschnitt einer ersten Teilschale 20 in einer Draufsicht auf die erste Innenseite 21. Die erste Teilschale 20 weist eine Fügefläche 22 auf, über die sie mit einer weiteren Fügefläche einer weiteren, beispielsweise einer zweiten Teilschale, verbindbar ist. Insbesondere wird die erste Teilschale 20 mit einer weiteren Teilschale verschweißt. Die erste Teilschale 20 weist mehrere parallel zueinander angeordnete Kanalabschnitte 25 auf, die zusammen mit korrespondierenden Kanalabschnitten der weiteren Teilschale einen Kanal zum Aufnehmen und/oder Führen eines Fluids bilden. Die Kanalabschnitte sind über Umlenkstellen 26 miteinander verbunden. Weiterhin ist eine Auslassstelle 27 gezeigt, an der das Fluid bspw. nach dem Erwärmen austreten kann.

Die erste Teilschale 20 weist mehrere Innenabschnitte 28 auf, in denen die Fügeflächen 22 jeweils einen Hohlraum 24 aufweisen. Zudem ist zu erkennen, dass die Hohlräume 24 mit einem Langloch 23 als Ausführungsbeispiel einer Öffnung verbunden sind. Wird die erste Teilschale 20 mit einer weiteren Teilschale an den Fügeflächen 22 verbunden, bleiben die Hohlräume 24 und die Langlöcher 23 frei. Bei einer Undichtigkeit oder einem Qualitätsverlust der Verbindungsnaht tritt das in den Kanälen geführte Fluid durch die Langlöcher 23 aus. Somit kann die Dichtigkeit und Qualität jederzeit und bei jedem Produkt überprüft werden.

In den Außenabschnitten 29 sind keine Langlöcher oder dergleichen vorgesehen, da eine Undichtigkeit auch ohne ein solches Langloch in die Umgebung gelangt und die Undichtigkeit demnach festgestellt werden kann.

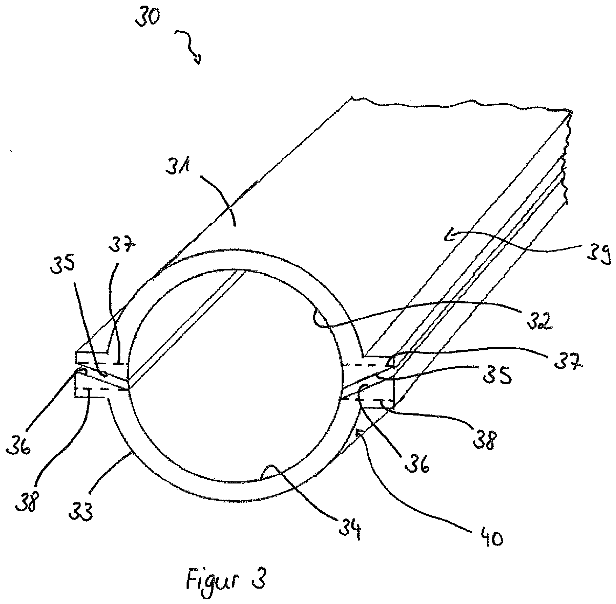

Figur 3 zeigt einen Ausschnitt eines Kanalabschnitts 30. Der Kanalabschnitt 30 weist eine erste Teilschale 39 mit einer ersten Außenseite 31 und einer ersten Innenseite 32 sowie eine zweite Teilschale 40 mit einer zweiten Außenseite 33 und einer zweiten Innenseite 34 auf, die übereinander angeordnet sind so den Kanalabschnitt 30 bilden. Die erste Teilschale 39 weist auf der ersten Innenseite 32 eine erste Fügefläche 35 auf, die zweite Teilschale 40 eine zweite Fügefläche 36. Die erste 35 und zweite 36 Fügefläche weisen dabei jeweils eine Abschrägung auf. Weiterhin zeigt Figur 3 durch die gestrichelten Linien eine erste ebene Fügefläche 37 und eine zweite ebene Fügefläche 38 gemäß dem Stand der Technik. Vorteilhaft bei den abgeschrägten Fügeflächen ist, dass die Fügeflächen vergrößert werden, ohne dass sie in horizontaler Richtung eine größere Länge aufweisen müssen. Die Festigkeit der Schweißnähte wird dadurch erhöht.

## Patentansprüche

1. Fügebauteil (1) zum Aufnehmen und/oder Führen eines Fluids, umfassend:
- eine erste Teilschale (2) mit einer ersten Außenseite (10), einer ersten Innenseite (12) und einer an der ersten Innenseite (12) vorgesehenen ersten Fügefläche (6),
- eine zweite Teilschale mit einer zweiten Außenseite (13), einer zweiten Innenseite (14) und einer an der zweiten Innenseite vorgesehenen zweiten Fügefläche (6'),
wobei die erste und die zweite Teilschale (2, 3) an der ersten und zweiten Fügefläche (6, 6') über eine Verbindungsnaht (5) miteinander verbunden sind und wenigstens zwei Kanäle (11) zum Aufnehmen und/oder Führen des Fluids bilden, und
die wenigstens zwei Kanäle (11) in einem Innenabschnitt (8) durch die Verbindungsnaht (5) voneinander getrennt sind, und
im Innenabschnitt (8) ein sich entlang der Verbindungsnaht (5) erstreckender Hohlraum (15) vorgesehen ist, und
in der ersten und/oder zweiten Teilschale (2, 3) wenigstens eine Öffnung (7) zum Überprüfen der Qualität einer Schweißnaht (5) zwischen der ersten Fügefläche (6) und der ersten Außenseite (10) und/oder der zweiten Fügefläche (6') und der zweiten Außenseite (13) angeordnet ist,
wobei der Hohlraum (15) mit der wenigstens einen Öffnung (7) verbunden ist, so dass bei einem Qualitätsverlust der Verbindungsnaht (5) das Fluid zumindest teilweise an der ersten bzw. zweiten Außenseite (10, 13) austritt.

2. Fügebauteil (1) nach Anspruch 1, **dadurch gekennzeichnet, dass** die erste und zweite Teilschale (2, 3) jeweils als Kunststoff-Spritzgussteil ausgebildet sind.

3. Fügebauteil (1) nach einem der Ansprüche 1 oder 2, **dadurch gekennzeichnet, dass** das Fügebauteil (1) als Heizblockkörper zur Verwendung in einem Warmwasserbereiter zum Erwärmen von Wasser ausgeführt ist.

4. Fügebauteil (1) nach einem der vorstehenden Ansprüche, **dadurch gekennzeichnet, dass** die Öffnung (7) als kreisrunde Bohrung oder Langloch ausgeführt ist.

5. Fügebauteil (1) nach einem der vorstehenden Ansprüche, **dadurch gekennzeichnet, dass** die erste und die zweite Teilschale (2, 3) über einen im Wesentlichen abriebsfreien und/oder erschütterungsfreien Schweißvorgang verbunden sind, insbesondere mittels Warmgasschweißen zusammengesetzt und fest verbunden sind.

6. Fügebauteil (1) nach einem der vorstehenden Ansprüche, **gekennzeichnet durch** einen Außenabschnitt (9), in dem die wenigstens zwei (11) Kanäle durch die Verbindungsnaht (5) von der Umgebung getrennt sind, und
die erste und/oder zweite Fügefläche (6, 6') in dem Innenabschnitt (8) und/oder Außenabschnitt (9) eine Abschrägung aufweist.

7. Fügebauteil nach Anspruch 6, **dadurch gekennzeichnet, dass** die Abschrägung einen Winkel von 30° bis 60°, insbesondere 45°, aufweist.

8. Warmwasserbereiter zum Erwärmen von Wasser umfassend ein Fügebauteil (1) nach einem der vorstehenden Ansprüche.

9. Verfahren zum Überprüfen von Verbindungsnähten in einem Fügebauteil (1) gemäß einem der Ansprüche 1 bis 7 zum Aufnehmen und/oder Führen eines Fluids, umfassend die Schritte:
- Einleiten des Fluids in die wenigstens zwei Kanäle (11),
- Überprüfung der Qualität der Verbindungsnaht (5) anhand wenigstens einer während der Herstellung in dem Fügebauteil (1) vorgesehenen Öffnung (7), die einen sich entlang der Verbindungsnaht (5) erstreckenden Hohlraum (15) mit der ersten und/oder zweiten Außenseite (10, 13) der ersten bzw. zweiten Teilschale (2, 3) verbindet und durch die das Fluid bei einem Qualitätsverlust an der ersten bzw. zweiten Außenseite (10, 13) austritt.

## Claims

1. Joining component (1) for receiving and/or guiding a fluid, comprising:
- a first partial shell (2) having a first outer side (10), a first inner side (12) and a first joining surface (6) provided on the first inner side (12),
- a second partial shell having a second outer side (13), a second inner side (14) and a second joining surface (6 ') provided on the second inner side,
wherein the first and the second partial shell (2, 3) on the first and second joining surface (6, 6') are interconnected via a connecting seam (5) and form at least two channels (11) for receiving and/or guiding the fluid, and
at least two channels (11) are separated from one another in an inner section (8) by the connecting seam (5), and
in the inner section (8) a cavity (15) extending along the connecting seam (5) is provided, and
in the first and/or second partial shell (2, 3) at least one opening (7) for checking the quality of the weld seam (5) between the first joining surface (6) and the first outer side (10) and/or the second joining surface (6') and the second outer side (13) is disposed,
wherein the cavity (15) is connected to at least one opening (7), so that when quality of the connecting seam (5) deteriorates, the fluid leaks at least partially on the first and/or second outer side (10, 13).

2. Joining component (1) according to claim 1, **characterised in that** the first and second partial shell (2, 3) are each formed as a plastic injection-moulded component.

3. Joining component (1) according to one of claims 1 or 2, **characterised in that** the joining component (1) is designed as a heating block body for use in a hot water heater for heating water.

4. Joining component (1) according to one of the preceding claims, **characterised in that** the opening (7) is designed as a circular bore or slot.

5. Joining component (1) according to one of the preceding claims, **characterised in that** the first and the second partial shell (2, 3) are connected by a substantially abrasion-free and/or vibration-free welding operation, in particular welded by means of hot gas welding, assembled and rigidly connected.

6. joining component (1) according to one of the preceding claims, **characterised by** an outer section (9) in which at least two (11) channels are separated from the surrounding by the connecting seam (5), and
the first and/or second joining surface (6, 6') in the inner section (8) and/or outer section (9) is chamfered.

7. Joining component according to claim 6, **characterised in that** the chamfer has an angle of 30° to 60°, in particular 45°.

8. Hot water heater for heating water comprising of a joining component (1) according to one of the preceding claims.

9. Method for checking the connecting seams in a joining component (1) according to one of claims 1 to 7 for receiving and/or guiding fluid, comprising the steps:
- Introducing the fluid into at least two channels (11),
- Checking the quality of the connecting seam (5) by means of at least one opening (7) provided in the joining component (1) during manufacture, which connects a cavity (15) extending along the connecting seam (5) with the first and/or second outer side (10, 13) of the first and second partial shell (2, 3) and through which the fluid leaks upon loss of quality at the first and second outer side (10, 13).

## Revendications

1. Élément de jonction (1) destiné à accueillir et/ou acheminer un fluide, comprenant :
- une première coque partielle (2) avec une première face extérieure (10), une première face intérieure (12) et une première surface de jonction (6) prévue au niveau de la première face intérieure (12),
- une seconde coque partielle (2) avec une seconde face extérieure (13), une seconde face intérieure (14) et une seconde surface de jonction (6') prévue au niveau de la seconde face intérieure (14),
**caractérisé en ce que** la première et la seconde coques partielles (2, 3) au niveau de la première et de la seconde surface de jonction (6, 6') sont reliées l'une à l'autre par un joint de raccordement (5) et forment au moins deux canaux (11) destinés à accueillir et/ou acheminer le fluide, et
**en ce que** les au moins deux canaux (11) sont séparés l'un de l'autre dans une partie intérieure (8) par le joint de raccordement (5), et
**en ce que**, dans la partie intérieure (8), on prévoit un espace creux (15) s'étendant le long du joint de raccordement (5), et
**en ce que**, dans la première et/ou la seconde coque partielle (2, 3), on dispose au moins une ouverture (7) destinée à contrôler la qualité du joint de soudage (5) entre la première surface de jonction (6) et la première face extérieure(10) et/ou la seconde surface de jonction (6') et la seconde face extérieure(13),
l'espace creux (15) étant relié à la au moins une ouverture (7) de sorte que, en cas de perte de qualité du joint de raccordement (5), le fluide s'échappe au moins en partie au niveau de la première ou de la seconde face extérieure (10, 13).

2. Élément de jonction (1) selon la revendication 1, **caractérisé en ce que** la première et la seconde coques partielles (2, 3) sont réalisée sous forme de pièce en plastique moulée par injection.

3. Élément de jonction (1) selon la revendication 1 ou 2, **caractérisé en ce que** l'élément de jonction (1) est réalisé sous forme de bloc chauffant à utiliser dans un chauffe-eau.

4. Élément de jonction (1) selon l'une des revendications précédentes, **caractérisé en ce que** l'ouverture (7) est réalisée sous forme de perforation circulaire ou de trou oblong.

5. Élément de jonction (1) selon l'une des revendications précédentes, **caractérisé en ce que** la première et la seconde coques partielles (2, 3) sont connectées à l'aide d'un procédé de soudage essentiellement non abrasif et sans à-coups, et sont en particulier assemblés et solidement connectés par soudage au gaz chaud.

6. Élément de jonction (1) selon l'une des revendications précédentes, **caractérisé par** une partie extérieure (9) dans laquelle au moins deux canaux (11) sont séparés de l'environnement par le joint de raccordement (5), et
la première et/ou la seconde surface de jonction (6, 6') présente un chanfrein dans la partie intérieure (8) et/ou la partie extérieure (9).

7. Élément de jonction (1) selon la revendication 6; **caractérisé en ce que** le chanfrein présente un angle compris entre 30° et 60°, en particulier 45°.

8. Chauffe-eau comprenant un élément de jonction (1) selon l'une des revendications précédentes.

9. Procédé de contrôle de joints de raccordement dans un élément de jonction (1) selon l'une des revendications 1 à 7 pour l'accueil et/ou l'acheminement d'un fluide, comprenant comme étapes :
- introduction du fluide dans les au moins deux canaux (11),
- Contrôle de la qualité du joint de raccordement (5) à l'aide d'au moins une ouverture (7) prévue dans l'élément de jonction (1) pendant la fabrication, qui raccorde un espace creux (15) s'étendant le long du joint de raccordement (5) avec la première et/ou la seconde face extérieure (10, 13) de la première ou de la seconde coque partielle (2, 3) et à travers laquelle le fluide s'échappe en cas de perte de qualité au niveau de la première ou de la seconde face extérieure (10, 13).
